# EUROPÄISCHE PATENTSCHRIFT

(11) **EP 1 058 015 B1**
(45) Veröffentlichungstag und Bekanntmachung des Hinweises auf die Patenterteilung: **19.06.2002**
(21) Anmeldenummer: 00109464.8
(22) Anmeldetag: 04.05.2000
(51) Int. Cl.: F16B 39/24

(54) **Sicherungsscheibe**
Locking washer
Rondelle d'arrêt

(30) Priorität: 28.05.1999 DE 29909332 U; 29.01.2000 DE 20001608 U
(43) Veröffentlichungstag der Anmeldung: 06.12.2000
(73) Patentinhaber: BENTELER AG, D-33104 Paderborn (DE)
(72) Erfinder: Möller, Matthias, 32257 Bünde (DE)
(74) Vertreter: Ksoll, Peter, Dr.-Ing.

(56) Entgegenhaltungen:
- DE-U- 29 806 800
- FR-A- 991 258
- FR-A- 2 687 439
- US-A- 5 051 049
- US-A- 5 632 584

## Beschreibung

Die Erfindung betrifft eine Sicherungsscheibe für zwei verdrehfest miteinander zu verbindende Bauteile, insbesondere Kraftfahrzeugbauteile, welche einen Scheibenkörper mit in Richtung auf die Bauteile vorstehenden Formschlusskörpem besitzt.

Kraftfahrzeugbauteile unterliegen im Betrieb starken statischen und dynamischen Belastungen. Eine hohe Qualität der Kraftfahrzeugbauteile selber ebenso wie bei deren Montage ist daher unumgänglich, insbesondere wenn es sich um Fahrwerks- oder Karosseriekomponenten handelt. Bei schraubtechnisch verbundenen Kraftfahrzeugbauteilen ist daher eine gute und verrutschungssichere Kopplung der Bauteile erforderlich.

In diesem Zusammenhang sind unterschiedlichste Schraubensicherungen in Form von Federringen oder Sprengringen bekannt, die der Mutter untergelegt werden, um ein ungewolltes Lösen von Befestigungsschrauben zu verhüten. Solche Schraubensicherungen sollen Kriech- und Setzbeträge ausgleichen und verhindern, dass die Vorspannung der Verbindung in unzulässigem Maße abnimmt. Ein Verdrehen oder Verrutschen von zwei miteinander verbundenen Bauteilen, insbesondere wenn die Schraube mit Spiel durch die Bohrungen in einem Blech geführt ist, können derartige Schraubensicherungen jedoch nur bedingt verhindern. Dies gilt sowohl bei der Montage als auch im späteren Einsatz, wenn die Bauteile größeren dynamischen Belastungen, insbesondere schwingender Art, unterworfen sind.

Durch das DE 298 06 800 U1 zählt eine Sicherungsscheibe für zwei verdrehfest miteinander zu verbindende Bauteile zum Stand der Technik. Diese weist in Richtung auf die Bauteile vorstehende Formschlusskörper in Form von Stahlkugeln auf, die in Ausnehmungen des Scheibenkörpers festgelegt sind. Bei der Montage drücken sich die Stahlkugeln in die Bauteile. Hierdurch wird bei einer Reibschlussverbindung ein zusätzlicher Formschluss durch Erzeugung einer Scherfläche erzielt. Die Sicherungsscheibe wirkt damit als Koppelelement, welches eine Relativbewegung zwischen den Bauteilen nach der Montage verhindert.

Diese Sicherungsscheibe hat sich in der Praxis bestens bewährt. Sie ist für unterschiedlichste Anwendungszwecke sehr gut geeignet.

Häufig werden die Sicherungsscheiben an einem Bauteil vormontiert. Dies ist im Zuge einer rationellen Endfertigung vorteilhaft. Bei einer bekannten Bauart einer Sicherungsscheibe sind hierzu in seitlichen Flanschabschnitten des Scheibenkörpers Löcher vorgesehen, durch die Kunststoffnägel bzw. - dübel in vorbereitete Bohrungen am Bauteil getrieben werden. Dies geschieht manuell unter Zuhilfenahme eines Schlagwerkzeugs.

Diese Vorgehensweise bei der Vormontage ist jedoch aufwendig und kostennachteilig. Desweiteren können sich die Kunststoffnägel nach dem Festlegen Lockern und herausfallen. Eine vormontierte Sicherungsscheibe kann dann verloren gehen. Auch nach der Montage der Bauteile lösen sich die Kunststoffnägel mitunter. Es besteht dann die Gefahr, dass sie ganz herausfallen oder, wenn es sich um hohle Bauteile handelt, in diese hereinfallen, was nachteilige Auswirkungen wie Geräuschentwicklung und ähnliches haben kann.

Der Erfindung liegt daher ausgehend vom Stand der Technik die Aufgabe zugrunde, eine Sicherungsscheibe sowohl anwendungstechnisch als auch in ihrer Funktionalität zu verbessern.

Die Lösung dieser Aufgabe besteht nach der Erfindung in einer Sicherungsscheibe gemäß Anspruch 1, bei der randseitig am Scheibenkörper von diesem im wesentlichen vertikal oder rechtwinkelig abstehende Haltearme mit integrierten Widerlagern angeordnet sind.

Mit den Haltearmen wird eine Sicherungsscheibe im Rahmen der Vormontage in vorhandene Öffnungen eines Bauteils eingeführt. Sie fixiert dort selbsthaltend. Zusätzliche Mittel wie Kunststoffnägel sind nicht erforderlich. Hierdurch wird die Montage wesentlich vereinfacht und ist rationeller durchzuführen. Das Lochbild an den zu verbindenden Bauteilen bleibt unverändert.

Gemäß der besonders vorteilhaften Ausgestaltung nach Anspruch 2 sind die Haltearme durch am Scheibenkörper angeformte fingerartige Federschenkel ausgebildet. Die Federschenkel stehen in die gleiche Richtung weisend vom Scheibenkörper ab und liegen sich zweckmäßigerweise diametral gegenüber.

Die Widerlager an den Haltearmen können grundsätzlich verschiedenartig ausgebildet sein. Eine für die Praxis besonders vorteilhafte Ausführungsform sieht nach Anspruch 3 vor, dass ein Widerlager durch einen seitlichen Vorsprung am Haltearm gebildet ist. Ein solcher Vorsprung ist vorzugsweise an den parallel zur durch die Haltearme verlaufende Mittellängsachse des Scheibenkörpers liegenden Schmalseiten der Haltearme angeordnet. Der Vorsprung ist folglich quer zur Mittellängsachse ausgerichtet. Grundsätzlich kann der Vorsprung aber auch durch eine radial, insbesondere nach außen, gerichtete Ausbauchung im Haltearm gestaltet sein.

Insbesondere in der Kombination mit den Merkmalen von Anspruch 2 wird so eine zuverlässige klemmende Halterung der Sicherungsscheibe an einem Bauteil gewährleistet. Das bislang festgestellte Herausfallen der Sicherungsscheibe in einer Schlackerbewegung beim Handling der Bauteile wird so zuverlässig vermieden.

Gemäß den Merkmalen des Anspruchs 4 ist in jedem Haltearm ein Längsschlitz vorgesehen. Diese Maßnahme unterstützt die Federeigenschaften der Haltearme und ist vorteilhaft beim Einbau der Sicherungsscheibe. Die Haltearme können beim Einführen in die Montageöffnungen begrenzt nachgeben. Nach Passieren der Montageöffnungen federn die Haltearme seitlich auf und fixieren die Sicherungsscheibe. In diesem Zusammenhang kann es ebenfalls vorteilhaft sein, dass die Haltearme zweischenklig ausgebildet sind, wie dies Anspruch 5 vorsieht. Der Haltearm ist dann zum freien Ende hin offen.

Der Einführvorgang wird weiterhin dadurch verbessert, dass die freien Enden der Haltearme gerundet sind (Anspruch 6).

Als Formschlusskörper kommen gemäß Anspruch 7 in der sich bewährten Art Stahlkugeln zum Einsatz. Diese besitzen ein Übermaß gegenüber den Ausnehmungen im Scheibenkörper und sind in diese eingepresst.

Eine fertigungstechnisch vorteilhafte Maßnahme besteht in den Merkmalen des Anspruchs 8. Danach ist vorgesehen, dass die auf einem Teilkreis liegenden Formschlusskörper sowohl bezogen auf die Spiegelachse, welche durch die Haltearme verläuft, als auch bezogen auf die Spiegelachse, welche senkrecht hierzu steht, unsymmetrisch zueinander angeordnet sind. Bei der Fertigung einer Sicherungsscheibe im kontinuierlichen Durchlauf in einer Fertigungslinie liegen die Kugeln mithin jeweils auf eigenen Längsbahnen, so dass sie nacheinander eingepresst werden können. Das zeitgleiche Einpressen von zwei Formschlusskörpern ist nicht erforderlich, was fertigungstechnisch von Vorteil ist.

Die Erfindung ist nachfolgend anhand eines Ausführungsbeispiels näher beschrieben. Es zeigen:
- Figur 1: eine erfindungsgemäße Sicherungsscheibe in der Seitenansicht;
- Figur 2: eine Draufsicht auf die Sicherungsscheibe gemäß Figur 1;
- Figur 3: eine Ansicht auf die Darstellung der Figur 2 gemäß dem Pfeil III und
- Figur 4: die Sicherungsscheibe in einer Einbausituation.

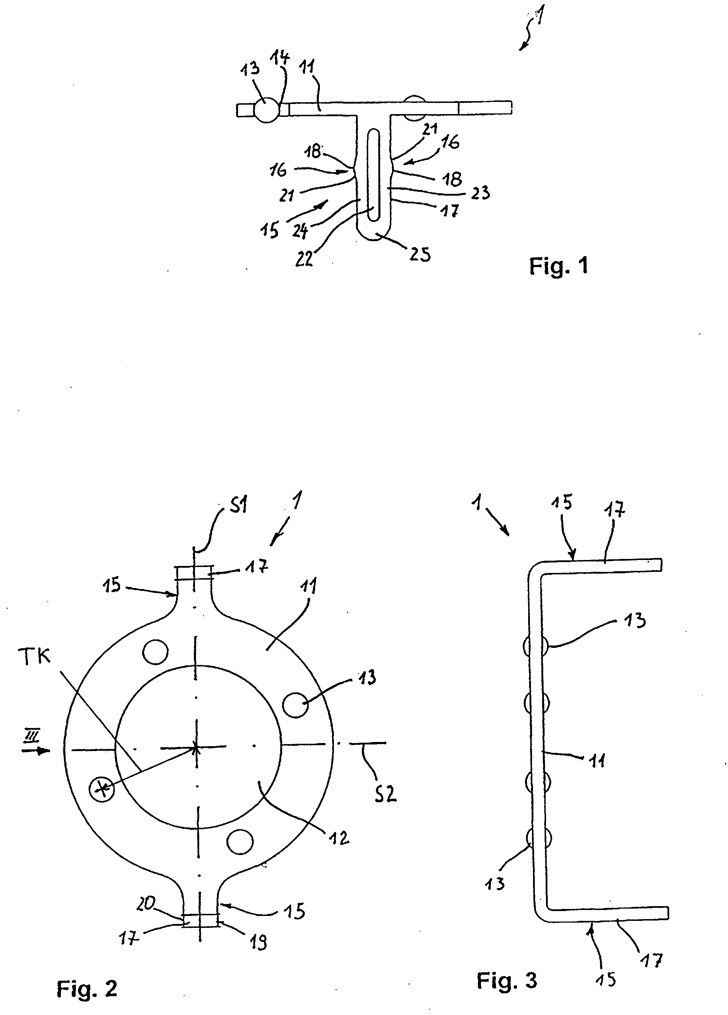

In den Figuren 1 bis 4 ist mit 1 eine Sicherungsscheibe bezeichnet.

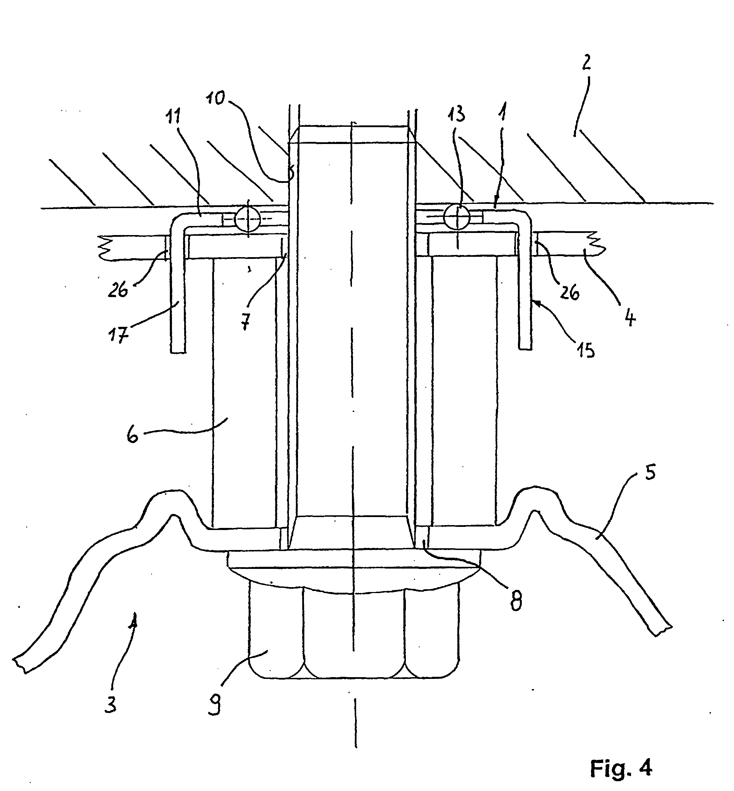

Wie die Figur 4 zeigt, ist die Sicherungsscheibe 1 als Zwischenlage zwischen zwei verdrehfest und verrutschfest miteinander zu verbindenden Bauteilen 2 und 3 eingegliedert. Bei dem hier schematisiert dargestellten Bauteil 2 handelt es sich um den Fahrzeugboden eines Kraftfahrzeugs. Das Bauteil 3 ist ein Ausschnitt aus einem Achsträger. Mit 4 ist die Oberschale und mit 5 die Unterschale des Achsträgers 3 bezeichnet. Zwischen Oberschale 4 und Unterschale 5 ist eine Distanzbuchse 6 angeordnet. Ferner weisen die Oberschale 4 und die Unterschale 5 Montageöffnungen 7, 8 für die Durchführung einer Schraube 9 auf. Mit Hilfe der Schraube 9, die durch die Montageöffnungen 7, 8 und die Distanzbuchse 6 in eine Gewindebohrung 10 am Fahrzeugboden 2 geführt wird, erfolgt die Festlegung des Achsträgers 3 am Fahrzeugboden 2.

Die Sicherungsscheibe 1 umfasst einen Scheibenkörper 11 mit einer Durchführöffnung 12 für die Schraube 9. Die Sicherungsscheibe 1 besitzt über den Scheibenkörper 11 in Richtung auf den Fahrzeugboden 2 bzw. die Oberschale 4 des Achsträgers 3 vorstehende Formschlusskörper in Form von Stahlkugeln 13. Diese sind in Ausnehmungen 14 des Scheibenkörpers 11 eingepresst.

Randseitig sind am Umfang des Scheibenkörpers 11 zwei vertikal oder rechtwinkelig abstehende Haltearme 15 mit integrierten Widerlagem 16 angeordnet. Die Haltearme 15 liegen sich diametral gegenüber und sind als an den Scheibenkörper 11 angeformte Federschenkel 17 ausgebildet.

Wie anhand der Figur 1 zu erkennen ist, sind an jedem Federschenkel 17 seitliche Vorsprünge 18 ausgebildet, die als Widerlager 16 fungieren. Die Vorsprünge 18 liegen an den Schmalseiten 19, 20 der Federschenkel 17 und weisen seitlich gerundete Flanken 21 auf. Im Haltearm 15 ist ein Längsschlitz 22 vorgesehen, so dass der Federschenkel 17 zwei Schenkelabschnitte 23, 24 besitzt, welche im freien Ende 25 zusammenlaufen. Das freie Ende 25 ist gerundet. Hierdurch ebenso wie durch die federelastische Nachgiebigkeit der Schenkelabschnitte 23, 24 wird die Montage der Sicherungsscheibe 1 erleichtert.

Man erkennt anhand der Figur 4, dass in der Oberschale 4 zu beiden Seiten der Montageöffnungen 7 Bohrungen 26 vorgesehen sind. In diese werden die Haltearme 15 der Sicherungsscheibe 1 bei der Vormontage eingeführt. Hierbei geben die Federschenkel 17 bzw. die Schenkelabschnitte 23, 24 unter Druck seitlich nach, bis die Vorsprünge 18 die Bohrungen 23 passiert haben. Die Schenkelabschnitte 23, 24 federn dann auf und erzeugen eine klemmende Einspannung. Die Sicherungsscheibe 1 ist zuverlässig am Achsträger 3 lageorientiert und verbleibt hier bis zur Montage der Achsträger 3 am Fahrzeugboden 2. Ein Herausfallen der Sicherungsscheibe 1 wird durch die Widerlager 16 in den Haltearmen 15 vermieden.

Beim Verspannen des Achsträgers 3 am Fahrzeugboden 2 mittels der Schraube 9 dringen dann die Stahlkugeln 13 bereichsweise unter Ausbildung von Vertiefungen einerseits in die Oberschale 4 und andererseits in den Fahrzeugboden 2 ein. Auf diese Weise wird eine formschlüssige Verbindung zwischen dem Fahrzeugboden 2 und dem Achsträger 3 durch Eingliederung der Sicherungsscheibe 1 hergestellt.

Die Figur 2 verdeutlicht, dass die Stahlkugeln 13 auf einem Teilkreis TK liegen und bezogen auf die Spiegelachsen S1 und S2 unsymmetrisch zueinander angeordnet sind. Diese versetzte Anordnung ist fertigungstechnisch vorteilhaft, da die Stahlkugeln 13 dann in einer Fertigungslinie nacheinander eingepresst werden können.

### Bezugszeichenaufstellung

- 1 -: Sicherungsscheibe
- 2 -: Fahrzeugboden
- 3 -: Achsträger
- 4 -: Oberschale
- 5 -: Unterschale
- 6 -: Distanzbuchse
- 7 -: Montageöffnung
- 8 -: Montageöffnung
- 9 -: Schraube
- 10 -: Gewindebohrung
- 11 -: Scheibenkörper
- 12 -: Durchführöffnung
- 13 -: Stahlkugel
- 14 -: Ausnehmung
- 15 -: Haltearm
- 16 -: Widerlager
- 17 -: Federschenkel
- 18 -: Vorsprung
- 19 -: Schmalseite v. 15
- 20 -: Schmalseite v. 15
- 21 -: Flanke v. 18
- 22 -: Längsschlitz
- 23 -: Schenkelabschnitt
- 24 -: Schenkelabschnitt
- 25 -: freies Ende v. 15
- 26 -: Bohrung

## Patentansprüche

1. Sicherungsscheibe zur Eingliederung zwischen zwei zu verbindende Bauteile (2, 3), welche einen Scheibenkörper (11) mit in Richtung auf die Bauteile (2, 3) vorstehenden Formschlusskörpern (13) besitzt, **dadurch gekennzeichnet, dass** randseitig am Scheibenkörper (11) von diesem im wesentlichen vertikal oder rechtwinkelig abstehende Haltearme (15) mit integrierten Widerlagern (16) angeordnet sind.

2. Sicherungsscheibe nach Anspruch 1, **dadurch gekennzeichnet, dass** die Haltearme (15) als an den Scheibenkörper (11) angeformte Federschenkel (17) ausgebildet sind.

3. Sicherungsscheibe nach Anspruch 1 oder 2, **dadurch gekennzeichnet, dass** ein Widerlager (16) durch einen seitlichen Vorsprung (18) an jedem Haltearm (15) gebildet ist.

4. Sicherungsscheibe nach einem der Ansprüche 1 bis 3, **dadurch gekennzeichnet, dass** in jedem Haltearm (15) ein Längsschlitz (22) vorgesehen ist.

5. Sicherungsscheibe nach einem der Ansprüche 1 bis 3, **dadurch gekennzeichnet, dass** die Haltearme zweischenklig ausgebildet sind.

6. Sicherungsscheibe nach einem der Ansprüche 1 bis 5, **dadurch gekennzeichnet, dass** die freien Enden (25) der Haltearme (15) gerundet sind.

7. Sicherungsscheibe nach einem der Ansprüche 1 bis 6, **dadurch gekennzeichnet, dass** die Formschlusskörper durch in Ausnehmungen (14) des Scheibenkörpers (11) eingepresste Stahlkugeln (13) gebildet sind.

8. Sicherungsscheibe nach einem der Ansprüche 1 bis 7, **dadurch gekennzeichnet, dass** die auf einem Radius oder einem Teilkreis (TK) liegenden Formschlusskörper (13) bezogen auf die Spiegelachsen S1 und S2 unsymmetrisch zueinander angeordnet sind.

## Claims

1. A locking washer for incorporation between two components (2,3), comprising a washer body (11) with positive-engagement members (13) projecting in the direction of the components (2,3), **characterised in that** retaining arms (15) with integrated abutments (16) are disposed at the edge of the washer body (11) and project substantially vertically or at right angles therefrom.

2. A locking washer according to claim 1, **characterised in that** the retaining arms (15) are constructed as spring limbs (17) formed integrally on the washer body (11)

3. A locking washer according to claim 1 or 2, **characterised in that** an abutment (16) is formed by a lateral projection (18) on each retaining arm (15).

4. A locking washer according to any one of claims 1 to 3, **characterised in that** a slot (22) is provided in each retaining arm (15).

5. A locking washer according to any one of claims 1 to 3, **characterised in that** the retaining arms are constructed with two limbs.

6. A locking washer according to any one of claims 1 to 5, **characterised in that** the free ends (25) of the retaining arms (15) are rounded.

7. A locking washer according to any one of claims 1 to 6, **characterised in that** the positive-engagement members are formed by steel balls (13) pressed into recesses (14) in the washer body (11).

8. A locking washer according to any one of claims 1 to 7, **characterised in that** the positive-engagement members (13) lying on a radius or on a pitch circle (TK) are disposed asymmetrically to one another with respect to the axes of symmetry S1 and S2.

## Revendications

1. Rondelle d'arrêt pour l'intégration entre deux composants (2, 3) à relier, qui possède un corps de rondelle (11) comportant des corps de coopération de formes (13) dépassant en direction des composants (2, 3), **caractérisée en ce que** des bras de maintien (15) sont agencés du côté bordure sur le corps de rondelle (11) qui font saillie de celui-ci sensiblement verticalement ou à angle droit et qui comportent des contre-butées intégrées (16).

2. Rondelle d'arrêt selon la revendication 1, **caractérisée en ce que** les bras de maintien (15) sont réalisés sous forme de branches élastiques (17) conformées sur le corps de rondelle (11).

3. Rondelle d'arrêt selon l'une ou l'autre des revendications 1 et 2, **caractérisée en ce qu'**une contre-butée (16) est formée par une saillie latérale (18) sur chaque bras de maintien (15).

4. Rondelle d'arrêt selon l'une quelconque des revendications 1 à 3, **caractérisée en ce qu'**une fente oblongue (22) est prévue dans chaque bras de maintien (15).

5. Rondelle d'arrêt selon l'une quelconque des revendications 1 à 3, **caractérisée en ce que** les bras de maintien sont réalisés avec deux branches.

6. Rondelle d'arrêt selon l'une quelconque des revendications 1 à 5, **caractérisée en ce que** les extrémités libres (25) des bras de maintien (15) sont arrondies.

7. Rondelle d'arrêt selon l'une quelconque des revendications 1 à 6, **caractérisée en ce que** les corps de coopération de formes sont formés par des billes d'acier (13) enfoncées à la presse dans des évidements (14) du corps de rondelle (11).

8. Rondelle d'arrêt selon l'une quelconque des revendications 1 à 7, **caractérisée en ce que** les corps de coopération de formes (13) situés sur un rayon ou sur un cercle partiel (TK) sont agencés de façon asymétrique les uns aux autres par rapport aux axes de symétrie S1 et S2.
